# EUROPEAN PATENT APPLICATION

(11) **EP 4 322 669 A1**
(43) Date of publication of application: **14.02.2024**
(21) Application number: 22190289.3
(22) Date of filing: 12.08.2022
(51) Int. Cl.: H04W 72/0446, H04L 5/14

(54) **USER EQUIPMENT, SCHEDULING NODE, METHOD FOR USER EQUIPMENT, AND METHOD FOR SCHEDULING NODE**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); NUNOME, Tomoya, Miyagi, 981-3206 (JP); LI, Hongchao, 63225 Langen (DE); HORIUCHI, Ayako, Osaka, 571-8501 (JP)
(74) Representative: Grünecker Patent- und Rechtsanwälte PartG mbB

(57) **Abstract**

The present disclosure relates to a communication device, a scheduling device and respective methods for a communication device and a scheduling device. For example, the communication device is a user equipment (UE) comprising a circuitry and a transceiver. The transceiver may be configured to receive a first signalling and a second signalling, wherein the first signalling is a cell common signalling. The circuitry may be configured to obtain, from the first signalling, a first indication indicating a first slot format for a frequency band, and to obtain, from the second signalling, a second indication indicating a second slot format for the frequency band. The first slot format specifies, for each of a plurality of time intervals, whether a transmission direction in the time interval is flexible, an uplink direction, or a downlink direction. The second slot format specifies, for each or a subset of the plurality of time intervals, whether a transmission direction in the time interval is flexible, the uplink direction, or the downlink direction. Moreover, the second slot format specifies: (i) a different transmission direction than the first slot format for a time interval of the plurality of time intervals for which the first slot format specifies that the transmission direction is the downlink direction, and/or (ii) a different transmission direction than the first slot format for a time interval of the plurality of time intervals for which the first slot format specifies that the transmission direction is the uplink direction.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates increasing the efficiency and/or flexibility of present communication systems. In particular, it may become possible to flexibly configure slot configurations/formats for individual UE(s) or particular groups of UE(s), and enable subband non-overlapping full duplex (SBFD) within a conventional/ legacy (e.g. Rel-15/16/17 NR) Time Division Duplex (TDD) band. In particular, techniques are disclosed that may allow to support SBFD operation in Rel-18 and beyond with minimum impact on legacy NR deployment.

In an embodiment, the techniques disclosed here feature an apparatus (e.g. communication device, in particular a user equipment (UE)). The apparatus comprises a transceiver and circuitry. The transceiver, in operation, receives a first signalling and a second signalling, wherein the first signalling is a cell common signalling. The circuitry, in operation, obtains, from the first signalling, a first indication indicating a first slot format for a frequency band, and obtains, from the second signalling, a second indication indicating a second slot format for the frequency band. The first slot format specifies, for each of a plurality of time intervals, whether a transmission direction in the time interval is flexible, an uplink direction, or a downlink direction. The second slot format specifies, for each or a subset of the plurality of time intervals, whether a transmission direction in the time interval is flexible, the uplink direction, or the downlink direction. Moreover, the second slot format specifies: (i) a different transmission direction than the first slot format for a time interval of the plurality of time intervals for which the first slot format specifies that the transmission direction is the downlink direction, and/or (ii) a different transmission direction than the first slot format for a time interval of the plurality of time intervals for which the first slot format specifies that the transmission direction is the uplink direction.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- Fig. 1: shows an exemplary architecture for a 3GPP NR system;
- Fig. 2: is a schematic drawing that shows a functional split between NG-RAN and 5GC;
- Fig. 3: is a sequence diagram for RRC connection setup/reconfiguration procedures;
- Fig. 4: is a schematic drawing showing usage scenarios of Enhanced mobile broadband (eMBB), Massive Machine Type Communications (mMTC) and Ultra Reliable and Low Latency Communications (URLLC);
- Fig. 5: is a block diagram showing an exemplary 5G system architecture for a non-roaming scenario;
- Fig. 6: illustrates the relationship between Bandwidth Parts, Control Resource Sets (CORESETS), search spaces, search space sets, and PDCCH candidates;
- Fig. 7: illustrates an exemplary time-domain structure in a communication system, such as 5G NR, including radio frames, subframes, slots, and OFDM symbols for different subcarrier spacings;
- Fig. 8: illustrates usage of dedicated legacy signallings to configure a flexible slot of the first (legacy cell common) slot format as downlink for some UEs (UE1 and UE3) and uplink for another UE (UE2);
- Fig. 9: is a block diagram of a communication system including a user equipment and a base station with their respective exemplary functional structures;
- Fig. 10: is a block diagram illustrating an exemplary functional structure of the processing circuitry at the user equipment side;
- Fig. 11: is a block diagram illustrating an exemplary functional structure of the processing circuitry at the base station side;
- Fig. 12: is a flow chart illustrating exemplary steps performed by the user equipment as well as exemplary steps performed by the base station;
- Fig. 13: is a flow chart illustrating exemplary steps performed by the user equipment to determine the transmission directions for time intervals in which a second, non-legacy slot format indicates a different transmission direction for a non-flexible time interval of the first, legacy slot format;
- Fig. 14: is a flow chart illustrating exemplary steps, different from the steps of Fig. 13, performed by the user equipment to determine the transmission directions for time intervals in which the second, non-legacy slot format indicates a different transmission direction for a non-flexible time interval of the first, legacy slot format;
- Fig. 15: is a flow chart illustrating exemplary steps performed by the base station for performing SBFD on a downlink symbol of the first, legacy slot format;
- Fig. 16: illustrates usage of a second, cell common signalling to obtain a "D→U" configuration in the n+1-th to n+3-th slots of a second, non-legacy slot format "DUUUU" with respect to the first, legacy cell common slot format "DDDDU";
- Fig. 17: illustrates usage of a second, cell common signalling to obtain a "D→F" configuration in the n+1-th to n+3-th slots of a second, non-legacy slot format "DFFFU" with respect to the first, legacy cell common slot format "DDDDU";
- Fig. 18: illustrates usage of two second, dedicated signallings to obtain two respective second, non-legacy slot formats: a second slot format "DUUUU" with a "D→U" configuration in the n+1-th to n+3-th slots with respect to the first, legacy cell common slot format "DDDDU" and a second slot format "DDFFU" with a "D→F" configuration in the n+2-th and n+3-th slots with respect to said first slot format;
- Fig. 19: illustrates usage of a second, cell common signalling to obtain a "D→U" configuration in the n+1-th slot, a "D→U" configuration in the n+2-th slot, and a "U→D" configuration in the n+3-th slot of a second, non-legacy slot format "DUUDU" with respect to the first, legacy cell common slot format "DDDUU";
- Fig. 20: illustrates usage of a second, cell common signalling to obtain a "D→U" configuration in the n+1-th slot, a "D→U" configuration in the n+2-th slot, and a "U→F" configuration in the n+3-th slot of a second, non-legacy slot format "DUUFU" with respect to the first, legacy cell common slot format "DDDUU"; and
- Fig. 21: illustrates usage of two second, dedicated signallings to obtain two respective second, non-legacy slot formats: a second slot format "DUUDU" with a "D→U" configuration in the n+1-th slot, a "D→U" configuration in the n+2-th, and a "U→D" configuration in the n+3-th slot with respect to the first, legacy cell common slot format "DDDUU" and a second slot format "DFFFU" with a "D→F" configuration in the n+1-thto n+3-th slots with respect to said first slot format.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

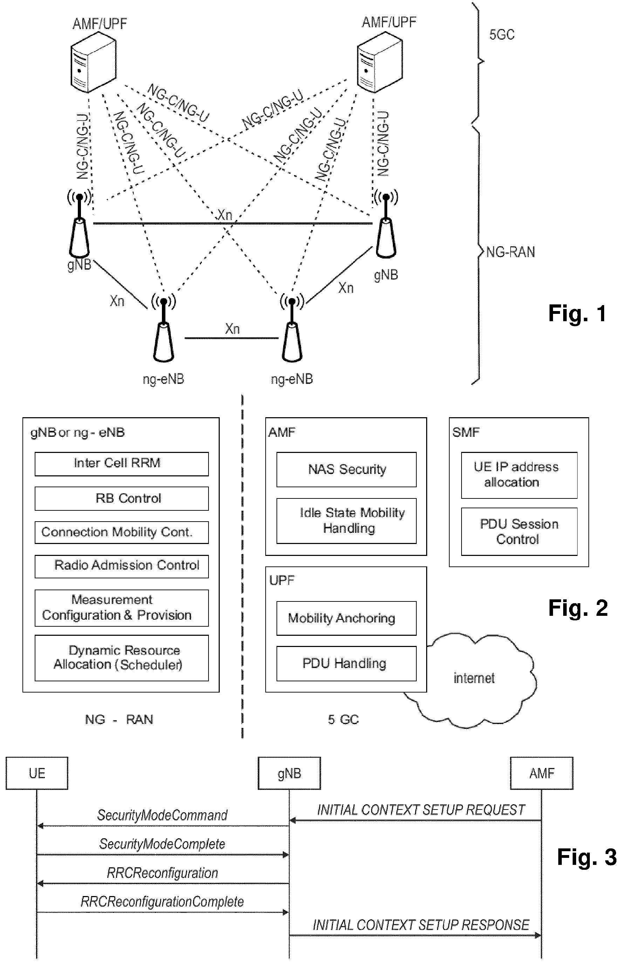

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 /Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

Fig. 2 illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

Fig. 3 illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

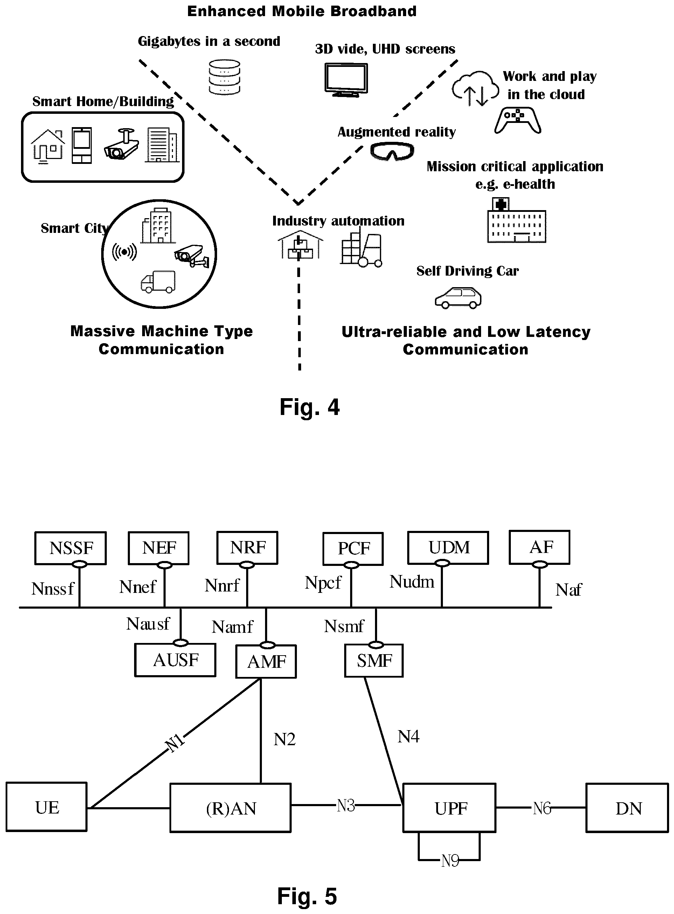

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Bandwidth Parts - BWPs

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v16.6.0.

Switching between configured BWPs may be achieved in different ways. Operation of Bandwidth parts in uplink and downlink is e.g. defined in a 5G NR compliant implementation in 3GPP 38.321 e.g. v16.8.0 section 5.15. BWPs can be switched for instance by means of downlink control information (DCIs) (e.g. using a Bandwidth part indicator in DCI format 0_1 (UL grant) and DCI format 1_1 (DL schedule)), using the bwp-inactivity Timer, using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

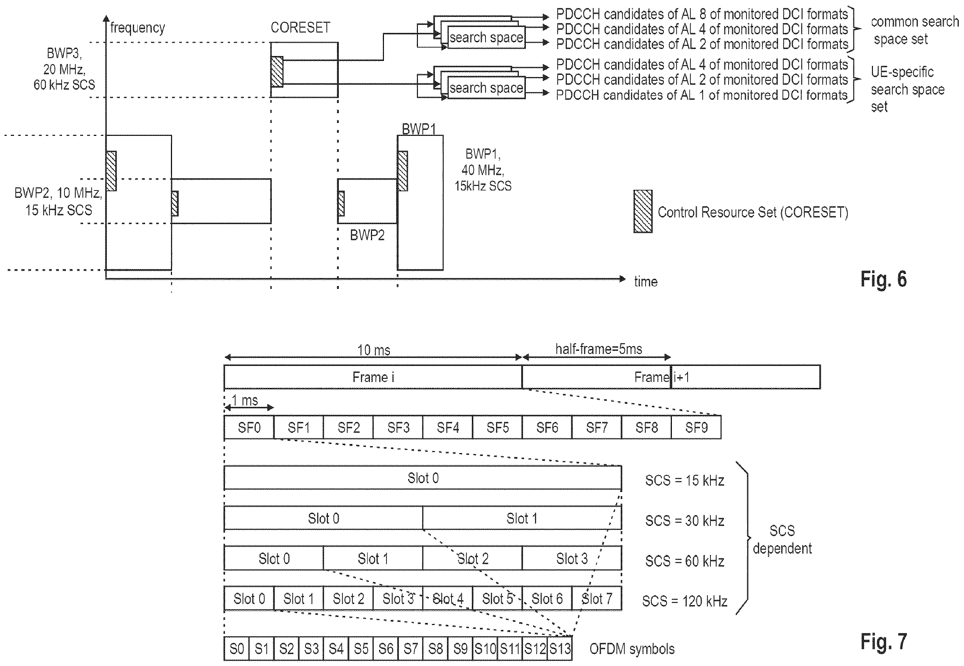

Fig. 6 illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

According to one exemplary 5G NR compatible implementation in line with 3GPP 38.331 e.g. v16.8.0, different RRCReconfiguration information elements can be used.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| **DCI format** | **Usage** |
|---|---|
| 0_0 | Scheduling of PUSCH in one cell |
| 0_1 | Scheduling of PUSCH in one cell |
| 0_2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Cancel UL transmission |
| 2_5 | Notify availability of soft resources |
| 2_6 | Notify power saving information |
| 3_0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a Type0A-PDCCH CSS set configured by *searchSpaceOtherSystemlnformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *pagingSearchSpace* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, **Fig. 6** provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in Fig. 7.

### Slot Format in Rel-15/16/17 NR

In Rel-15/16/17 NR, a gNB informs UEs of the transmission direction via the slot format (the transmission directions are Uplink (U), Downlink (D) and Flexible (F)). A slot format may be configured semi-statically by RRC and/or dynamically by DCI. For a semi-static configuration, a cell level common signaling (tdd-UL-DL-ConfigurationCommon) or a dedicated RRC signaling may be used (tdd-UL-DL-ConfigurationDedicated). To configure the slot format dynamically, a slot format indicator (SFI) is transmitted to the UE (SlotFormatlndicator by DCI format 2_0).

According to Rel-15/16/17 specifications, semi-static cell common D and U symbols cannot be changed by either UE-dedicated RRC or dynamic configuration (DCI 2_0) when configuring the slot format. Thus, conflicting configurations between the cell common slot configuration, on the one hand, and a dedicated RRC or dynamic configurations of particular UE(s) are not allowed currently (i.e., for of each time interval and UE, the transmission direction has to be comply with or "allowed by" the cell common slot configuration). In other words, only semi-static cell common F symbols can be overwritten to D or U by UE-dedicated RRC or DCI 2_0. If a semi-static cell common F symbol is not changed to D or U symbol (by either UE-dedicated RRC or DCI 2_0), UE follows scheduling DCIs (DCI formats 0_0/0_1/0_2/1_0/1_1/1_2) to decide on whether to transmit or receive.

### Further Improvements

3GPP is constantly looking for further possibilities to enhance coverage (UL and/or DL), to improve resource utilization, to reduce latency, and the like. For instance, an objective in Rel. 18 is directed to the "study on evolution of NR duplex operation" (if possible with no or minimal impact to legacy UEs).

In the above, the slot format configuration in Rel-15/16/17 NR was briefly presented. The inventors have identified problems in connection with the above. For instance, in conventional Time Division Duplex (TDD) operation, allocation of a limited time duration for the uplink in TDD may result in reduced coverage, increased latency and reduced capacity. Providing full duplex operation within a TDD band may enable more UL time duration to enhance UL coverage, may reduce latency and may allow to increase UL capacity, which is one main topic of the study item "study on evolution of NR duplex operation".

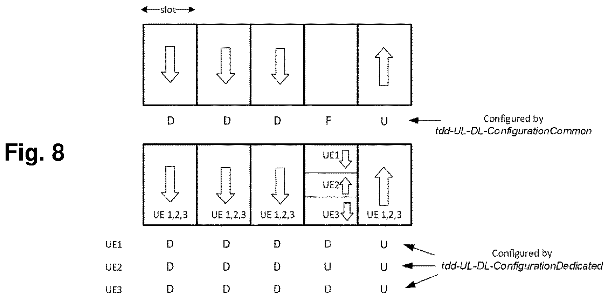

However, for subband non-overlapping full duplex (SBFD) operation at the gNB, the gNB may have to be able to configure different transmission directions to different UEs on the same symbol/slot. By Rel-15/16/17 specifications, this can be done only by UE-dedicated RRC slot format configuration or DCI 2_0.One example of using UE-dedicated RRC is illustrated in **Fig. 8****.** More specifically, the first row in Fig. 8 shows an exemplary semi-static configuration, configured by the base station via a cell level common signaling (tdd-UL-DL-ConfigurationCommon). The semi-static configuration is "DDDFU" for five slots (e.g. each symbols in a D slot may be a D symbol, same for U and F slots). However, as illustrated in Fig. 8, the existing signaling schemes (UE-dedicated RRC slot format configuration or DCI 2_0 (not shown in Fig.8)) can only overwrite semi-static flexible symbols/slots. For instance, in the example of Fig. 8, the scheduling device can only overwrite the flexible fourth slot (i.e. further configure the slot for individual UEs to be a U or D slot). This is illustrated in the second row of Fig. 8, where three dedicated RRC signalings (tdd-UL-DL-ConfigurationDedicated) are respectively used to indicate to three UEs that the F slot is a D or U slot. More specifically, it is indicate to UE1 and UE3 that the F slot is (for them) a D slot, and it is indicated to UE2 that (for it/UE2) the F slot is a U slot.

As a consequence, this may allow only SBFD for F slots/ symbols, where SBFD refers to full duplex operation is at the gNB side, and a half duplex operation at the side of the UEs. In other words, when performing the full duplex operation, the gNB is transmitting and receiving at the same time using resources in a same frequency band. However, at a given time, each UE is only either transmitting or receiving in the resources of the said frequency band. In other words, in Fig. 8. SBFD is only performed in the fourth slot, where the UE2 is configured with a different transmission direction (i.e. U) than the transmissions direction (D) with which the other two UEs are configured.

In particular, the term SBFD thus refers to simultaneous existence of downlink (DL) and uplink (UL) in a communication system within a frequency band or frequency subband e.g. within a (conventional/legacy) Time Division Duplex (TDD) band, for which a same cell-common slot format is used (each or some frequency bands may use/have different respective cell-common slot formats). When performing SBFD, the subband used for is thus used to split transmission directions. In otherwords, when performing SBFD in a frequency (sub)band, there are different transmission directions at a same time in said frequency (sub)band. It is noted that, at least from the base station perspective, a TDD band used for SBFD may not be operated in a TDD mode anymore.

Performing SBFD based on specifying semi-static F symbols may not be sufficient or limit the flexibility of the base station, in particular since F symbols are not widely used in current 5G NR deployment. For instance, in Japan 5G deployment, the TDD pattern (in slot) "DDDSUUDDDD" is used, where S is a special slot containing D, F, and U symbols, and F symbol is only used for the gap to switch between D and U.

Although the problem identified above is motivated from subband non-overlapping full duplex operation, the same problem exists as well for full duplex operation with overlapping subbands. In other words, it does not matter how the frequency resource allocation for full duplex operation is performed. As long as the base station is operating in full duplex and UEs are operating in half duplex, the problem identified and the corresponding solutions mentioned below can apply.

### Embodiments

The inventors have thus identified the possibility of providing improved procedures, for allowing to avoid one or more of the above described disadvantages. The present invention relates to different solutions and variants for such improved procedures.

Accordingly, the present disclosure provides techniques for increasing the efficiency of resource usage and/or flexibility in present communication systems.

In particular, it may become possible to flexibly configure slot configurations/formats for individual UE(s) or particular groups of UE(s), and enable SBFD within a conventional/ legacy (e.g. Rel-15/16/17 NR) TDD band. In particular, techniques are disclosed that may allow to support SBFD operation in Rel-18 or beyond with minimum impact on legacy NR deployment.

The present disclosure in particular provides a scheduling devices, corresponding methods for scheduling devices, user equipments, corresponding methods for user equipments, communications systems comprising such scheduling devices and user equipments, as well as integrated circuits which, in operation, control a processes of scheduling devices/user equipment to perform the respective methods.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the *base station* may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

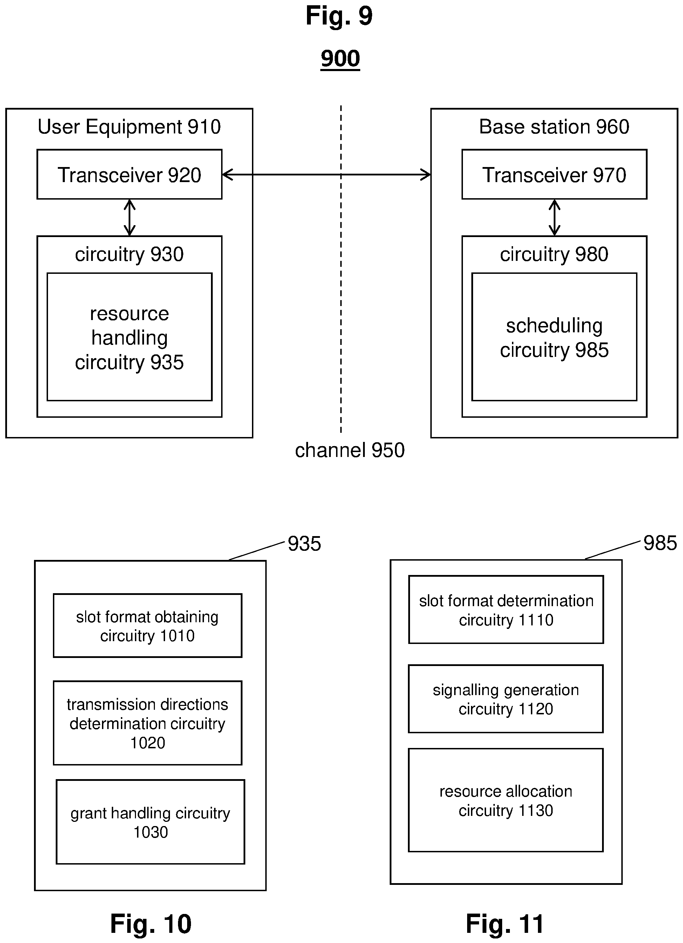

As already mentioned above, the present disclosure provides a scheduling device (e.g. a base station) and a communication device (e.g. a scheduled device or user equipment). The present disclosure further provides a system including a scheduled and scheduling device, as well as a corresponding methods and programs. An example of such communication system is illustrated in Fig. 9. The communication system 900 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

Fig. 9 illustrates a general, simplified and exemplary block diagram of a communication device 910 (here exemplarily assumed to be a UE) and a scheduling device 960 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 910 may also be a sensor device, a wearable device, or a connected vehicle, or a controller of an automated machine in an industrial factory. Further, a communication device 910 may be able to function as a relay between a base station and another communication device (e.g. the disclosure is not limited to communication "terminals" or user "terminals").

As illustrated in Fig. 9, the communication device 910 and the scheduling device 960 (eNB/gNB) may communicate with each other over a (wireless) physical channel 950 respectively using their transceivers 920 (UE side) and 970 (base station side). Together, the scheduling device 960 and the terminal 910 form the communication system 900. The communication system 900 may further include other entities such as those shown in Fig. 1.

As illustrated in Fig. 9 (left-hand side), a communication device may comprise a transceiver and circuitry (or processing circuitry), and a scheduling device may comprise a transceiver and a (processing) circuitry. The *transceiver* in turn may comprise and/or function as a receiver and/or a transmitter. In this disclosure, in other words, the term *"transceiver"* is used for hardware and software components that allow the communication device, or, respectively base station to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

A transmitter may be responsible for performing the process of transmitting and other processes related thereto. A receiver may be responsible for performing the process of receiving and other processes related thereto, such as monitoring a channel.

A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 910 as e.g. illustrated in **Fig. 9** (left-hand side) is provided. The communication device 910 comprises a transceiver 920 and circuitry 930.

The transceiver 920, in operation, receives a *"first signalling"* and a *"second signalling",* which are further explained below. It is noted that the transceiver may also perform other transmissions/receptions of data and/or other control signals. The transceiver may perform the transmissions/reception in accordance with the slot formats (in particular, in accordance the second slot format). The (processing) circuitry 930, in operation: (i) obtains, from the first signalling, a first indication indicating a *"first slot format"* for a frequency band, and (ii) obtains, from the second signalling, a second indication indicating a *"second slot format"* for the frequency band. It is noted that the first and the second slot format are also further explained below. For instance, the UE may obtain the first and the second slot format respectively from the first and the second signalling by parsing the first/second signalling and/or extracting, from the first/second signalling, the first /second indication and/or the first/second slot format.

It is noted that the circuitry 930 may implement more functionality than the above-mentioned obtaining of the first and second indication as it may, for instance, further control the transceiver 920 to receive control signalling (in particular, the first and the second signalling), to receive data, and/or to transmit data. This controlling of the transceiver may be performed in accordance with the first and/or the second slot format.

Thus, the circuitry 930 is exemplarily considered to include resource handling circuitry 935, which is configured to perform said obtaining of the first and second indication. The configuration may be provided by hardware adaption and/or by software.

**Fig. 10** shows an exemplary functional structure of the resource handling circuitry 935. In particular, the resource handling circuitry 935 may include slot format obtaining circuitry 1010, which may obtain the first and second indication; and transmission directions determination circuitry 1020, which may determine the transmission direction for the time intervals in accordance with the first and/or the second slot format.

It is noted that the resource handling circuitry 935 may implement more functionality, as it may, for instance, also determine resources for transmission/reception of data based on received scheduling grants (e.g. DCI/PDCCH), which may be performed in accordance with the determined transmission directions. This functionality may be provided by grant handling circuitry 1030, which is exemplarily assumed to be part of resource handling circuitry 935.

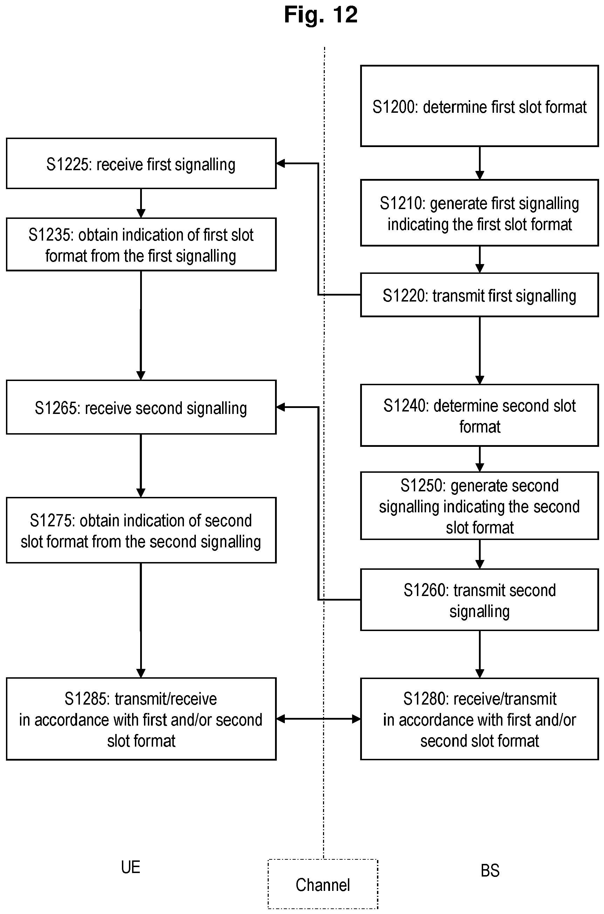

In correspondence with the above described communication device, a communication method to be performed by a communication device is provided. As shown in Fig. 12, the method comprises a step of receiving S1225 a first signalling; a step of obtaining S1235, from the first signalling, a first indication indicating a first slot format for a frequency band; a step of receiving S1265 a second signalling; and a step of obtaining S1275, from the second signalling, a second indication indicating a second slot format for the frequency band. The obtaining steps S1235 and 1275 may be performed by parsing/extracting as explained above. It is noted that the order of the steps may be different than shown in Fig. 12. For instance, the second signalling may be received S1265 before the indication of the first slot format is obtained. In particular, the first and the second signalling may be received together, e.g. as part of the same transmission.

As further shown in **Fig. 12****,** the UE may also transmit S1285 and/or receive S1285 data or control signals, in accordance with the first and/or the second slot format. In particular, the UE may interpret scheduling grants allocating resources to said UE in accordance with the transmission direction determined by transmission directions determination circuitry 1020. Step S1285 may thus include or be a step of determining a transmission direction of allocated resources in accordance with the first and/or the second slot format, and in particular with the transmission direction determined for the time interval and frequency band in which the allocated resources are located. More specifically, resources allocated in a time interval and frequency band for which the transmission direction is determined to be UL, may be interpreted to be UL resources, without further explicit indication from the base station (similarly resources in a DL time intervals, may be interpreted to be intended for a reception by the UE without further explicit indication). The UE may thus assume that there will only be DL or UL grants respectively for a DL or UL interval and plan its behavior accordingly (e.g. in terms of buffering, sleep behavior, and the like). If granted resources are in a time interval and frequency band for which the direction is determined to be flexible, the UE may expect a further indication in the scheduling grant whether the allocated resources are for a transmission or a reception by the UE.

As also shown in **Fig. 9** (right-hand side), according to another exemplary embodiment, a scheduling device 960 is provided. The scheduling device 960 comprises a transceiver 970 and circuitry 980. The (processing) circuitry 980, in operation, (i) determines a first slot format for a frequency band, (ii) generates a first signalling including a first indication indicating the first slot format, (iii) determines a second slot format for the frequency band, and (iv) generates a second signalling indicating the second slot format. Furthermore, the transceiver 970, in operation, transmits the first signalling and the second signalling.

The circuitry 980 may implement more functionality than the above-mentioned determining and generating, as it may, for instance, further control the transceiver 970 to transmit the first and the second signalling, and/or control the transceiver to receive or transmit data. Thus, the circuitry 980 is exemplarily considered to include scheduling circuitry 985, which is configured to perform said determining and generating. The configuration may be provided by hardware adaption and/or by software.

An exemplary functional structure of scheduling circuitry 985 is shown in **Fig. 11****.** In particular, the scheduling circuitry 985 may include slot format determination circuitry 1110, which may determine the first and the second slot format; and signalling generation circuitry 1120, which may generate the first and the second signalling. It is noted that the scheduling circuitry 985 may also implement more functionality, as it may, for instance also be responsible for allocating resources to the UEs and to generate respective scheduling grants (e.g. PDCCH/DCI) in accordance with the first and the second slot format and the corresponding transmission directions for the time intervals. This functionality may be provided by resource allocation circuitry 1130, which is exemplarily assumed to be part of scheduling circuitry 985.

Furthermore, in correspondence with the above described scheduling device, a communication method to be performed by a scheduling device is provided. As shown in **Fig. 12****,** the method comprises a step of determining S1200 a first slot format for a frequency band; a step of generating S1210 a first signalling including a first indication indicating the first slot format; a step of transmitting S1220 the first signalling; a step of determining S1240 a second slot format for the frequency band; a step of generating S1250 a second signalling indicating the second slot format; and a step of transmitting S1260 the second signalling.

As further shown in **Fig. 12****,** the scheduling device may also receive S1280 and/or transmit S1280 further transmissions (other than the transmission of the first and the second signalling), in accordance with the first and the second slot format and the transmission directions indicated thereby to the UE. Step S1280may also include or be a step of allocating resources for transmission/reception to the UE in accordance with the slot format(s) and transmission direction(s), generated corresponding scheduling grant(s), and transmit said grant(s) to the UE. Step S1280 may in general performed jointly with scheduling of resources for other transmission/receptions also of other UEs as well as in consideration of traffic conditions and quality requirements of services used by one or more UEs. As already noted for the UE above, the order of the steps may be different than the order shown in Fig. 12. This applies also for the scheduling device. For instance, the first signalling may be transmitted S1220 after the second slot format is determined S1250 and the second signalling is generated S1250. For instance, the first slot and the second slot format may be determined together (e.g. in one step/jointly), the first and the second may be generated together format, and/or the first and the second slot format may be transmitted together, e.g. as part of the same transmission.

In particular, regarding this, it is noted that, since the present disclosure relates to resource usage and scheduling, both entities, a scheduled device (typically communication device/transceiver device) and a scheduling device (typically a network node) take part. Accordingly, in the further description, the details and embodiments apply to (and may be implemented by them) each of the communication device, the scheduling device (or scheduling node), and the corresponding methods unless explicit statement or context indicates otherwise. In particular, the scheduling device may be configured to generate and transmit the control signals as described below and the communication device/UE may be configured to receive such signalling and obtain the respective indications therefrom. In particular, any of the steps/operations described below may be performed or controlled by the circuitry 930 (on the UE side) and/or the circuitry 980 (on the base station side). Furthermore, any reception and transmission steps may be performed by the transceiver 920 (on the UE side) and/or the transceiver 970 (on the base station side) (e.g. by being controlled by the respective circuitry to do so).

Regarding the determination of the slot formats and transmission directions by the UE and the scheduling device, it is noted that, since as mentioned before the UE and the scheduling device form a communication system both device should in general obtain the same transmission direction for a particular resource granted to the UE. In other words, both devices should be aware of the same slot formats and transmission directions. However, the slot format determination of the UE may differ from the slot format determination of the scheduling device in several respects.

The determination of the scheduling device may be the step in which the slot format and transmission directions are set/defined, whereas the UE generally only infers (from corresponding signallings or indications in said signallings), the slot format and transmission directions determined by the scheduling device. In particular, the scheduling device may take into account additional parameters such as available resources, quality of service, requests from UE(s) (also other UE(s)), received channel state information, traffic loads, battery status of UE(s), and the like. For instance, the scheduling device may try to optimize all these additional parameters and to find based on all of this the most suitable slot formats and transmission directions. While some of these parameters may be known to the UE, or may even be indicated, via a transmission by the UE to the scheduling device, other of these parameters (in particular those concerning other UE(s)) may not be known to the UE.

Thus, in general, the scheduling device is the one deciding the slot formats and transmission directions in its determination (e.g. steps 1200 and 1240, up to flexible time intervals, which may be decided later)), whereas the UE usually only determines/infers the slot formats and transmission directions set by the base station (for this UE). The determination of the UE is based on the first and second signalling. Since the determination of the UE should yield the same result as the determination of the scheduling device (for this UE), the methods according to the present disclosure in general apply to the UE and the base station side (network node, scheduling device).

Furthermore, the usage of the transmission direction may concern the base station in a different way: the base station has to generate further control signalling/grants, such that the UE can/will determine the intended/correct transmission directions based on the further control signalling as well as the first and second signalling. Thus, the generated first and second signalling should allow the UE to determine the transmission directions in case of the UL and DL direction, and a further indication should be transmit to the UE with respect to resources allocated in flexible time intervals. Accordingly, as mentioned above, there may be a step (at the base station side) of allocating UL or DL resources to the UE in accordance with the transmission directions. More specifically, when UL resources are to be allocated, resources in a time interval at which the transmission direction is uplink or flexible for this UE are selected; whereas when DL resources are to be allocated to the UE, resources in a time interval at which the transmission direction is downlink or flexible for this UE are selected. The base station may then generate a corresponding grant/signalling indicating the allocated resources to the UE. The UE may then receive the grant/signalling and determine the allocated resources in accordance with the slot formats, i.e. the UE may determine whether the allocated resources are UL or DL resources are in accordance with the transmission direction at the time/frequency of the allocated resources (or expect a further indication in case of the flexible direction).

In the above description, although the first signalling and the second signalling are used to indicate the first and the second slot formats, respectively. It does not necessarily mean that the first and the second slot format should be transmitted by the base station (and received by the UE) in a specific order. For example, it could happen that both the first and the second slot formats are transmitted by the base station (and received by the UE) at the same time, e.g. within the same SIB. In this case, the first signalling and the second signalling can be understood as two **different parameters** within the same SIB (the same RRC signalling).

### Slot Formats

In general, a slot format (in particular, the slot formats here referred to as "first slot format" and "second slot format") specifies, for each of a plurality of time intervals, whether the transmission direction in the time interval is flexible, in/the uplink direction, or in/the downlink direction. Details of this statement are now further explained below. In general, the second slot format and, in particular the second signalling, may not (explicitly) specify the transmission direction for each of the time intervals for which the first slot format specifies a transmission direction but only for a subset of time intervals for which the first slot format specifies a transmission directions. The transmission directions in the time intervals for which the second slot format and/or second the second signalling does not explicitly specify the transmission direction may then correspond to (e.g. be identical to) the respective transmission direction specifies by the first slot format for said time intervals. In other words, the second signalling may only specify the transmission directions for the time intervals in which the transmission direction of the second and first slot format differ from each other. Examples of such second signallings are presented below in section the section *"Second Signalling* - *Cell Common Signalling"* in the two syntax examples where "slotlndex" is used to identify those slots for which the second slot format has a different transmission direction.

### Slot Formats - Frequency bands

A slot format usually is for (or applies to) one or more frequency bands, i.e. in other frequency bands other slot formats may apply. In other words, at a same time, the transmission directions of two frequency bands, to which different slot formats apply, may be different from each other. The frequency band may be indicated in the first and the second signalling or may be implicitly known to the UE. For instance the frequency to which the first and the second signalling apply may be the frequency band in which the first and the second signalling are received.

The slot format here referred to as "first slot format" and "second slot format" are assumed to be for a same frequency band. For instance, the frequency band for which the first and second slot format specify the transmission directions may be a (conventional) TDD band and/or be or correspond to a bandwidth part (BWP). In general, a frequency band may be just a particular range of frequencies, or ranges of frequencies. This range(s) may be indicated to the UE (e.g. semi-statically), be predefined or preconfigured (e.g. defined in a standard). The UE and the base station may use other frequency bands than the frequency band to which the first and the second slot format apply. Merely for ease of understanding, such other frequency bands may not always be explicitly mentioned (e.g. it may be stated that the transmission direction indicated by a slot format for a time interval is a particular direction, without explicitly stating that in other frequency bands the transmission direction may be different than the transmission direction indicated by the first/second slot format for the frequency band(s) to which they apply).

### Slot Formats - Time Intervals

As stated above, a slot format specifies, for each of a plurality of time intervals, a corresponding transmission direction (corresponding to said time interval). These time intervals are in general non-overlapping and may be consecutive, i.e. without time gaps between two consecutive/adjacent time intervals. In particular, the plurality of time intervals may be a division of a period of time in the plurality of time intervals. Thus, the time intervals may be mutually non-overlapping and cover said period of time (which thus is itself a time interval).

Since the time intervals are usually symbols, such time intervals are here also referred to as flexible (F) symbols, uplink (U) symbols, or (D) downlink symbols, respectively. For instance, a slot format may include downlink (D), uplink (U), and flexible (F) symbols, thereby specifying which symbols are D symbols, which are U symbols, and which are F symbols. In the figures, the time intervals illustrates to be slots, which may mean that each symbol in such a F/U/D slot is of the same F/U/D type, which is also frequently the case.

However, the present disclosure is not limited to any particular time intervals used by the slot formats. In particular, the time intervals may be symbols, frames, subframes, slots, etc. or any number of symbols, frames, subframes, or slots. Furthermore, in general, the time intervals may have the same length (duration) or may have different lengths (again, this may be the length of a slot/symbol/frame/subframe, etc.). The time intervals and (or any of their properties such as the lengths and the positions) may be predetermined and/or the time intervals may be the basic time unit of a resource grid employed by the UE, or may be an integer-multiple of said basic time unit of the employed resource grid. Alternatively, a signaling (e.g. the "first signalling", the "second signalling", and/or a different control signalling, e.g. another DCI or RRC message) may include an indication of the time interval(s), in particular of the lengths of the time intervals.

The first time interval (the first, when the plurality of time intervals are ordered in time) may begin at the beginning of a (reference) time such as a reference frame, subframe, slot, or symbol. This reference time may be given by a system broadcast or may be a slot/frame/symbol in which the signalling indicating the slot format are received. Alternatively, the pattern may start at the beginning of the frame, subframe, slot, or symbol plus a predetermined time offset. In general, the value of such an offset may be predetermined, indicated by the scheduling device to the UE, or set by other means.

### Slot Formats - Repeating Pattern

In general, a slot format may indicate a sequence of direction indications (F being considered one of the indicatable directions here). The first indicated directions may be considered to be the transmission direction indicated for the first time interval (first when ordered in time), the second indicated direction may be considered to be transmission direction in the second time interval, and so forth. However, in general, the association between indicated transmission directions may be different as long as the UE and the base station are using the same convention.

In particular, a slot format may be indicating pattern of transmission direction indications (possibly including flexible as indicated transmission direction). Such a pattern may start at the beginning of the first time interval, and repeat itself after the end of the last time interval (last also when the time intervals are ordered in time). In other words, the plurality of time intervals may correspond to a division of a (repetition) period of the respective slot format (e.g. of the first and/or the second slot format) into (the) time intervals. The above mentioned period of time covered by the time intervals may thus be the (repetition) period of the pattern. Regarding this it is noted that in general the first and the second slot format may have the same repetition period or different repetition periods. The plurality of time intervals may then be (i) a division of the repetition period of the first slot format, (ii) a division of the repetition period of the second slot format, and/or e.g. (iii) a division of a common repetition period of the first and the second slot format (for instance, if the first slot format has a repetition period of 5 slots and the second slot format has a repetition period of 10 slots, common repetition periods are 10 slots, 20 slots and so forth).

In general, (repetition) period of a slot format refers to a time duration after which a pattern of transmission directions specified by said slot format repeats itself. More specifically, after the last time interval (of the plurality of time intervals), there is may be time interval with the same length and transmission direction as the first time interval which starts and the end of said last time interval, followed by a time intervals with the same length and transmission direction as the first time interval and so forth. For instance, if the pattern of Fig. 8 (DDDFU) had a repetition period of 5 slot, it would be continued DDDFUDDDFUDDDFU in the 6 to 20^{th} slot.

### Slot Formats -Transmission Directions

In general, from the perspective of a UE that performs a half-duplex operation in the frequency band for which a slot format indicates a transmissions direction, in each time interval, all resources in said frequency band are indicated to have the same transmission direction (UL/DL) or are all indicated to have a flexible transmission direction. In the latter case, the UE may expect further signalling specifying the transmission direction. This may be done by further specifying the slot format semi-static via dedicated RRC, dynamic via DCI, or in the explicitly in with a grant (e.g. a scheduling DCI) allocating resources for a particular transmission. It is also note that the above applies to the resources that are allocated to this UE; other UEs may not perform half-duplex in said frequency band, use a different slot format, and/or may have different transmission directions associated with particular resources, which they assume when these resources are allocated to them.

In particular, if the transmission direction of a particular time interval is indicated to be the *downlink direction,* the UE may expect to only receive transmissions (in particular from the base station from which it received the slot format). In particular, it may expect that each resource grant for said time interval is/will be a DL grant. The UE may thus expect to receive only DL grants for such a time interval, may interpret grants in this way. In particular, it may not be necessary that the base station indicates whether resources granted/allocated to the UE in said time interval are DL or UL resources. The UE may thus assume that there will only be DL grants for said interval and plan its behavior accordingly (e.g. in terms of buffering, sleep behavior, and the like). Correspondingly, the base station may only allocate resource for DL transmissions to the UE in said particular time interval.

If the transmission direction of a particular time interval is indicated to be the *uplink direction,* the UE may expect to only transmit transmissions (in particular to the base station from which it received the slot format). In particular, it may expect that each resource grant for said time interval is/will be a UL grant. The UE may thus expect to receive only UL grants for such a time interval, may interpret grants in this way. In particular, it may not be necessary that the base station indicates whether resources granted/allocated to the UE in said time interval are DL or UL resources. The UE may thus assume that there will only be UL grants for said interval at plan its behavior accordingly (e.g. in terms of buffering, sleep behavior, and the like). Correspondingly, the base station may only allocate resource for UL transmissions to the UE in said particular time interval.

If, the transmission direction of a particular time interval is indicated to be **flexible,** resources allocated in this time interval may be UL or DL resources, which will be indicated by a further specification of the slot format or by e.g. directly by the grant allocating resources in such a time interval.

### First Signalling & First Slot Format

In general, the first signalling may be a cell common signalling indicating the first slot format (or including an indication indicating the first slot format). In other words, the first slot format is a cell common slot format. For instance, the first slot format may be a slot format all/each UE in the cell and/or all/each UE served by the base station are made aware of e.g. via a broadcast (e.g. SIB1). For instance, the first slot format may be a legacy format (e.g. Rel-15/16/17), which all legacy UEs are expected to follow/use, and/or the first signalling may be signalling recognized by legacy UEs (legacy UEs may not recognize the second signaling as further explained below).

However, it is noted that the cell common first signalling may be transmitted to different UEs in different ways (e.g. dedicated, group RRCs to different groups of UEs, ...) and at different times and not be broadcast. In other words, the base station may generate the first signalling as a cell common signalling means that the conveyed control information/signalling (i.e. the first slot format) is common/applies to all UEs in the cell. In other words, the cell common signalling does not necessarily mean that this particular transmission of the first signalling is a broadcast and/or received by each UE in the cell (other UEs may receive the cell common signalling in a different transmission).

### Second Signalling

In general, the signalling indicating the second slot format to the UE is here referred to as the second signalling. Thus, in general, the second signalling may indicate, for each or a subset of the plurality of time intervals, whether the transmission direction is (i) flexible, (ii) the uplink direction, or (iii) the downlink direction.

In general, the second signalling may be a cell common signalling or a dedicated signalling. Regarding this, it is noted that these possibilities are not mutually exclusive. That is, both - second signallings that are a cell common signallings and second signalings that are a dedicated signallings may be supported (at the same time by a same UE or base station). In other words, while a specific second signalling is either a cell common or a dedicated signalling, in general some second signallings may be cell common and some other second signallings may be dedicated signallings. The UE and the base station may thus in general support (e.g. be configured to receive such signallings and obtain the second slot format therefrom) cell common second signallings and/or dedicated second signallings.

Accordingly, the base station may determine, based on a current situation (e.g. traffic load, QOS requirements of UEs, SRs), whether a second slot format is to be used (i) by each (non-legacy) UE; (ii) only by some UEs (e.g. a group); or (iii) only by one specific UE. At this, in option (ii) and (iii) may include determining which UEs are to use the second slot format. In general, these determinations may be performed together with the determination of the second slot format. The base station may then generate a corresponding second signalling or corresponding second signallings and transmit it/them to the relevant UEs.

A dedicated second signalling may allow the base station to configure each UE with its own individual slot format, which may increase the flexibility of the base station and improve the efficiency of resource usage in the communication system. A cell common second signalling may reduce the signalling overhead and may be more appropriate when the served UE have similar requirements e.g. in terms of current ratio of UL to DL traffic.

In general, the present disclosure is not limited to any particular type of second signalling, Details and examples of second signallings are now further explained below.

### Second Signalling - Cell Common Signalling

As mentioned above, the second signalling may be a cell common signalling. In particular, the new/second slot format may be semi-static and/or may be configured in a cell common manner. For instance, a new parameter here denoted as "tdd-UL-DL-ConfigurationCommon-r18" could be used. In general, a new parameter tdd-UL-DL-ConfigurationCommon-r18 may reuse the same structure as the existing one "tdd-UL-DL-ConfigurationCommon", or may use a new structure.

It is noted that, although it is a cell common signaling, it would not be visible to legacy UEs (e.g. Rel-15/16/17 UEs) because it is a newly introduced parameter. This means that the slot configuration of legacy UEs will not be impacted by such a new cell common parameter. Accordingly, for Rel-18 or beyond UE, UE capability to accept this new parameter can be optionally introduced. Rel-18 or beyond UE that have this capability may then use this new parameter (and the slot format indicated via said parameter), whereas non-capable Rel-18 or beyond UE may ignore such parameter.

For instance, as a first example, the following syntax may be used:

```
 tdd-UL-DL-ConfigurationCommon-r18 ::= SEQUENCE {
       slotlndex TDD-UL-DL-Slotlndex
       symbols CHOICE {
           allDownlink NULL,
           allUplink NULL,
           allFlexible NULL,
           explicit SEQUENCE {
                 nrofDownlinkSymbols INTEGER(1..maxNrofSymbols -1)
                 nrofUplinkSymbols INTEGER(1..maxNrofSymbols -1)
                 }}}
```

In this example, the "slotlndex" is used to identify a slot within a slot configuration period given in legacy tdd-UL-DL-ConfigurationCommon. It is noted that this period may be the repetition period of the pattern of the second slot format. Here, it is further noted that the first and the second slot format may in general have the same repetition period. In this case, the period of the second slot format may not have to be indicated to the UE (e.g. if the UE is aware of this, at it is e.g. predefined or preconfigured).

Furthermore, "symbols" is used to configure the direction for the symbols in this slot (the slot identified by "slotlndex". In particular, the value allDownlink indicates that all symbols in this slot are used for downlink; (ii) the value allUplink indicates that all symbols in this slot are used for uplink; (iii) the value allFlexible indicates that all symbols in this slot are flexible; and (iv) value explicit indicates explicitly how many symbols in the beginning and end of this slot are allocated to downlink and uplink, respectively.

In other words, the second signalling may indicate a sequence of slot indices (or time interval indices) and a sequence of slot configurations. The elements of these two sequences may be associated with each other in a one-to-one correspondence. In particular, a slot index may be followed by the associated slot configuration. The transmission directions in the slots with indices that are not part of the indicated sequence of slot indices may be the respective transmissions directions indicated by the first slot format for said slots. In other words, the sequence of slot indices indicates in which slots the transmission direction of the second slot format is different (at least different for some of the symbols) from the transmission direction of the first slot format.

Furthermore, the slot configuration for a slot may be indicated either by indicating (i) that all symbols are in the relevant slot are DL symbols, (ii) by indicating that all symbols are in the relevant slot are DL symbols, (iii) by indicating that all symbols are in the relevant slot are flexible symbols, (iv) or by explicitly indicating the number of UL symbols and the number of DL symbols. In (iv), it may be assumed that the DL symbols the beginning of the slot, the UL symbols are assumed at the end, and the remaining symbols are flexible symbols in the middle. For instance, if the slot has X symbols in total, the number of DL symbols is m and the number of UL symbols is n: the first m symbols may be DL symbols, followed by X-m-n flexible symbols, followed by n UL symbols at the end of the slot. However, the present disclosure is not limited thereto. For instance, whether the first symbols are the UL or DI symbols could also depend on the transmission direction in the slot before the presently considered slot, to which the explicit configuration applies.

As a second example, the following syntax may be used:

```
 tdd-UL-DL-ConfigurationCommon-r18 ::= SEQUENCE {
       slotlndex TDD-UL-DL-Slotlndex
       UplinkSymbolPosition BIT STRING (size (maxNrofSymbol) )
```

A in the above example, slotlndex is used to identify a slot within a slot configuration period given in legacy tdd-UL-DL-ConfigurationCommon. Furthermore, the location of UL symbols for the slot is indicated by a bitmap. In other words, the present example differs from the above in the indication of the slot configuration. In particular, as in the above example, using a bitmap, the position of uplink symbols are not limited to the end of a slot as shown in the first example. Further, the transmission directions in the slots with indices that are not part of the indicated sequence of slot indices may be the respective transmissions directions indicated by the first slot format. Furthermore, the transmission direction of symbols indicated to be in uplink direction may be the respective transmissions directions indicated by the first slot format. For such symbols, the first slot format may usually indicate that the transmission direction is the DL direction or flexible.

### Second Signalling - Dedicated RRC

As mentioned above, the second signalling may be a dedicated signalling, for instance dedicated Radio Resource control (RRC) signalling. In particular, the new/second slot format may be semi-static and/or may be configured in a UE dedicated manner. For instance, an existing parameter (in legacy configurations), such as the existing parameter "tdd-UL-DL-ConfigurationDedicated" of Rel-15/16/17 NR may be reused. Alternatively or in addition, a new parameter here denoted as "tdd-UL-DL-ConfigurationDedicated-r18" may introduced. Provision of a dedicated second signalling may provide the gNB with flexibility in selecting which UE(s) to configure as well the flexibility to configure different non-legacy UE with different slot formats than other non-legacy UEs.

The new parameter tdd-UL-DL-ConfigurationDedicated-r18 could reuse the same structure as existing one tdd-UL-DL-ConfigurationDedicated, or a new structure. If a new structure is used (i.e. a different structure from the structure used for the first signalling, e.g. as the structure in Rel-15/16/17 NR), one or more of the following elements may be included in the new parameter:
- the location of the U time intervals (e.g. which symbols and/or slots) within a certain period of slots (in particular when the second slot format has a "D→U" configuration with respect to the first slot format);
- the location of the F time intervals (e.g. which symbols and/or slots) within a certain period of slots (in particular when the second slot format has a "D→F" and/or a "U→F" configuration with respect to the first slot format); and/or
- the location of D time intervals (e.g. which symbols and/or slots) within a certain period of slots (in particular when the second slot format has a "U→D" and/or a "U→F" configuration with respect to the first slot format).

The above "certain period" may e.g. be the repetition period of the second slot format. In other words, the position of each "D→U", "D→F", "U→D" and "U→F" time interval may be indicated. The transmission direction for these time intervals (of which the location is included/indicated by the second signalling) may also be indicated in particular if (i) both "D→U" and "D→F", and/or (ii) both "U→D" and "U→F" are allowed. That is, for each of these time intervals that is a D time interval of the first slot format it may be indicated whether it is a U or a F interval in the second slot format; and or each of these time interval that is U time interval of the first slot format it may be indicated whether it is a D or a F interval in the second slot format.

### Second Signalling - Dynamic DCI

It is further noted that the present disclosure is not limited to a semi-static second slot format, as has been the case in the above two examples of a cell common and RRC-dedicated signalling. For instance, instead of configuring semi-static symbol/slot with different transmission directions than the transmission direction indicated by the first slot format for said symbol/slot, as described in the above two examples, a special DCI (e.g. a new DCI) may be used to schedule a transmission with a different transmission direction dynamically. E.g. in a semi-static DL symbol, such a DCI may schedule UL transmission for the UE.

### Second Slot Format

In general, the second slot format specifies: (i) a different transmission direction than the first slot format for a time interval of the plurality of time intervals for which the first slot format specifies that the transmission direction is the uplink direction, and/or (ii) a different transmission direction than the first slot format for a time interval of the plurality of time intervals for which the first slot format specifies that the transmission direction is the downlink direction. In other words, the second format changes the transmission direction of a time interval that is not a flexible time intervals of the first slot format.

For instance, Rel-18 (and beyond) UEs may be configured with a new semi-static slot format, where a different direction than that configured by legacy cell-common semi-static slot format (i.e. by tdd-UL-DL-ConfigurationCommon) is indicated for a slot or symbol. Thus, in general, the second slot format may be semi-static by the present disclosure is not limited thereto as already mentioned above.

In general, a (non-legacy) UE may be configured to determine, for each of the time intervals (of the subset of time intervals for which the second slot format specifies a transmission direction (explicitly)), that the transmission direction that indicated by the second slot format applies (and ignore the transmission direction indicated by the first slot format). The base station may be configured to schedule only transmission direction in accordance with the transmissions direction indicated to the UE by the second slot format. For instance, in each of the time intervals for which: (i) the first slot format specifies that the transmission direction is the downlink direction, and (ii) the second slot format specifies that the transmission direction is the uplink direction, the transmission direction may be the uplink direction (in particular, the UE may determine that the transmission direction is the uplink direction). It is noted that, if both slot formats indicate the uplink direction, it may also be determined that the transmissions direction is the uplink direction. The above condition (i) is mostly included to emphasize the two slot formats indicate an opposite direction for a particular time interval.

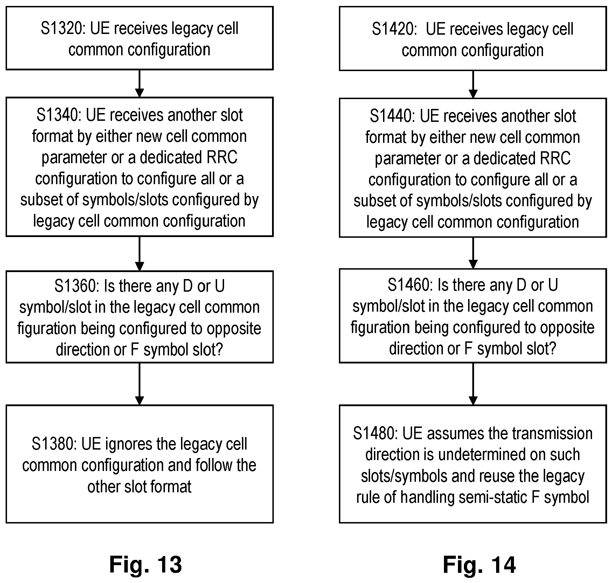

This is illustrated in **Fig. 13****,** where a UE receives a legacy cell common slot configuration (corresponding to a first slot format) in step S1320, and receives, in step S1340, another slot format (corresponding to a second slot format) e.g. by a new cell common parameter or a dedicated RRC configuration, which configures all or a subset of symbols/slots (corresponding to the time intervals) configured by the legacy cell common configuration. The UE may then determine S1360 whether or not the second slot format indicates a different transmission direction than the first slot format for any time terminal for which the first slot format indicates the uplink or the downlink direction (i.e. for which the first slot does not indicate that the transmission direction is flexible). It is noted that this step S1360 may be omitted in the example of Fig. 13. In step S1380, the UE then determined that the second slot format applies. More specifically, the UE may determine, for each time interval, that the transmission direction in said time interval is the transmission direction indicated by the second slot format.

However, the present disclosure is not limited thereto. For instance, as illustrated in **Fig. 14****,** a (non-legacy) UE may in general be configured to determine, for each of the time intervals, whether or not the second slot format indicates a different transmission direction than the first slot format for any time interval for which the first slot format indicates the uplink (U) or the downlink (D) direction. In other words, the UE may determine, if there is any time interval for which (i) the first slot format does not indicate that the transmission direction is flexible (i.e. indicates U or D) and (ii) the second slot format either indicates U or indicates D. In particular, the UE may determine the intervals for which (or may determine in which time intervals) the transmission direction indicated by the first slot format is not flexible and the second slot format indicates different transmission direction. This step S1460 and the reception steps S1420 and S1440 may be identical to steps S1660 S1420 and S1440 already described with respect to Fig. 13.

The UE may then determine S1480 that the transmission direction in the time intervals determined in step S1460 is undetermined by the slot formats and may reuse the legacy rule of handling semi-static F symbol. For instance, the transmission direction may be flexible in each of the plurality of time intervals for which: (i) the first slot format specifies that the transmission direction is the downlink direction, and (ii) the second slot format specifies that the transmission direction is the uplink direction. In other words, the UE may determine S1480 that the transmission direction in the time intervals determined in step S1460 is flexible or at least to be treated as flexible. Accordingly, gNB can configure UE to either receive or transmit (but not at the same time) on these symbols/slots or indicate the transmission direction the grant allocating the resources for a transmission.

The provision of the second slot format may allow to enhance the UL coverage which may be an issue in the legacy (Rel-15/16/17) NR setting. For instance, the total number (or e.g. overall number, amount, count) of time intervals for which the second slot format specifies that the transmission direction is the uplink direction may be larger than a total number (or e.g. overall number, amount, count) of time intervals for which the first slot format specifies that the transmission direction is the uplink direction. Here, the two total numbers of the first and the second slot format are total numbers with respect to a same time duration (e.g. total numbers in a/the repetition common period of the two slot formats). In other words, the number of UL slots/symbols of the new semi-static slot format may be larger than that of the legacy slot format, which may increase the UL coverage. Alternatively or in addition, the sum of the total number of the flexible time interval of the second slot format and the total number of the UL time intervals of the second slot format may be larger than the total number of the flexible time interval of the first slot format and the total number of the UL time intervals of the first slot format.

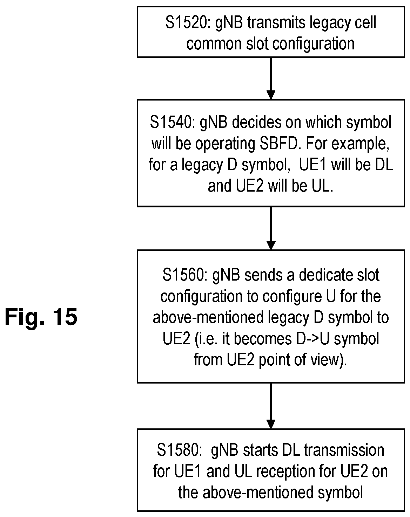

Furthermore, the provision of the second slot format may avoid changes in the slot format configuration in the legacy deployment. It may further enable SBFD operation by using different transmission directions between e.g. legacy UE and Rel-18 or beyond UE as will be further explained with reference to the gNB flowchart shown in **Fig. 15****.** In the example of Fig. 15, the gNB transmits S1520 a legacy cell common slot configuration (corresponding to a first signalling indicating first slot format).

The gNB then decides or determines S1540 on which symbol it will be operating SBFD. In other words, the base station determined which time intervals are suitable for performing (simultaneously) transmission(s) to some UE(s) and receptions from other UE(s). For example, the gNB may determine for a legacy D symbol, that a first UE (UE1) will be receiving transmission(s) and that another, second UE (UE2) will be transmitting transmissions. In other words, the gNB determines that the time interval corresponding to said D symbol will be used for SBFD, and that the transmission direction for said time interval will be DL for the first UE and UL for the second UE. In step S1560, gNB thus sends a dedicate slot configuration (corresponding to a second signalling) to configure U for the above-mentioned legacy D symbol to UE2 (i.e. s becomes D->U symbol from UE2 point of view). In other words, the gNB transmits a second signalling to UE2 including an indication indicating a second slot format that indicates that the transmission direction in the time interval corresponding to said legacy D symbol is the UL direction. In step S1580, the gNB starts/performs DL transmission for UE1 and UL reception for UE2 on the above-mentioned symbol (e.g. at the same time).

### Allowing D->U configuration

In general, the second slot format may specify that the transmission direction is the uplink direction for a (e.g. one or more/at least one/some time interval(s)) time interval for which the first slot format specifies that the transmission direction is the downlink direction.

It is noted that in the present, for ease of presentation, this circumstance is denoted by "D->U". Furthermore, in general, the case that the first slot format indicates X (X being U/D/F) and that the second slot format indicates Y (Y being U/D/F and in general different than X) is denoted as "X->Y". It is noted that this is not intended to imply that the first slot format is changed (in particular not for legacy UEs) or that the second signalling indicates differences with respect to the first slot format.

For instance, "D" in tdd-UL-DL-ConfigurationCommon (corresponding to a first signalling) may be configured as "U" by the second slot format. The UE may then assume UL transmission(s) in the "D->U" time intervals (i.e. the UE may follow the "new" configuration "U" and ignore legacy configuration "D" indicated by the first slot format), and the gNB may/will not configure any DL reception on these symbols/slots, as has been explained with reference to Fig. 13. Alternatively, the approach discussed with reference to Fig. 14 may be followed by UE and base station, i.e. the gNB can configure UE to either receive or transmit (but not at the same time) on these symbols/slots.

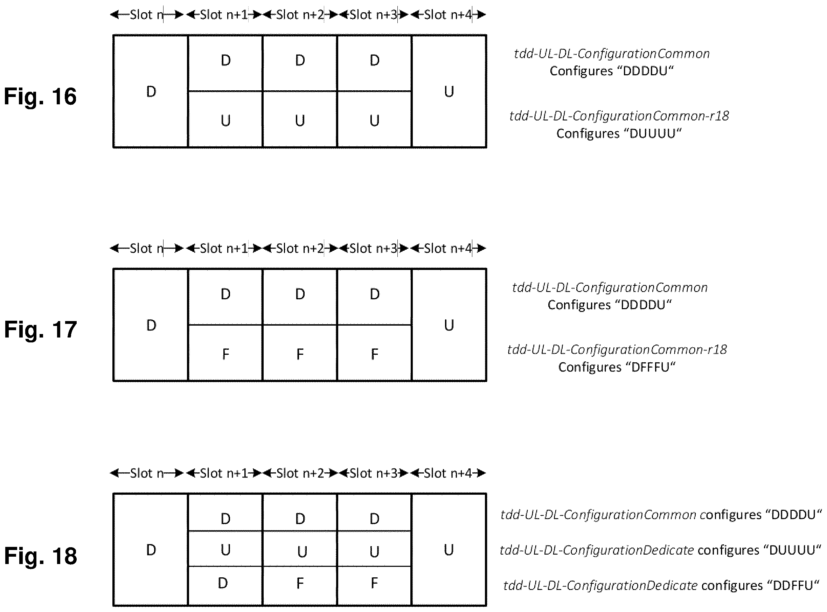

In the example of "D->U", is shown in **Fig. 16****.** The first and second slot format are assumed to be indicated respectively by two parameters, tdd-UL-DL-ConfigurationCommon (e.g. as specified by Rel-15/16/17 NR) and tdd-UL-DL-ConfigurationCommon-r18, as e.g. explained in one of the above examples. Both parameters are assumed to be broadcasted by SIB and exemplarily configure slot formats for a periodicity of 5 slots. In other words, both slot format have a repetition period of 5 slots. Rel-15/16/17 UEs recognize (only) tdd-UL-DL-ConfigurationCommon, and obtain the slot format as "DDDDU". Rel-18 or beyond UEs may recognize both parameters, and obtain the different slot format "DUUUU" from tdd-UL-DL-ConfigurationCommon-r18. As a result, SBFD operation at gNB is made possible, by transmitting DL and receiving UL at the same time over "D->U" symbols (i.e. the symbols contained in the n+1, n+2 and n+3 slot). More specifically, at the time of these "D->U" symbols, a legacy UE may receive transmissions from and non-legacy UE may transmit data to the base station.

A second lot format with a "D→U" configuration, thus may enable SBFD operation at the base station using time intervals for which the first slot format indicates that the transmission direction is the downlink direction, such as legacy (Rel-15/16/17NR) D symbols/slots).

### Allowing D->F configuration

In general, the second slot format may specify that the transmission direction is flexible for a time interval (e.g. one or more/at least one/some time interval(s)) for which the first slot format specifies that the transmission direction is the downlink direction.

For instance, "D" in tdd-UL-DL-ConfigurationCommon (corresponding to a first signalling) may be configured as "F" by the second slot format. The UE may assume that the transmission direction for such a time interval is undetermined by the slot format. Thus, the gNB can configure UEs to either receive or transmit (but not both at the same time) on these "D->F" symbols/slots.

An example of this is illustrated in **Fig. 17****,** which is similar to the above "D->U" case of Fig. 16, with the only difference that DFFFU is configured by tdd-UL-DL-ConfigurationCommon-r18 (i.e. by the second slot format). As a result, SBFD operation at gNB is made possible, by transmitting (DL) and receiving (UL) at the same time over "D->U" and "D->F" symbols.

More specifically, at the time of the "D->U" and "D->F" symbols (i.e. at the time of the symbols in slot n+1, n+2, and n+3), a legacy UE may receive transmissions from the base station and a non-legacy UE may transmit data to the base station.

### Combined case of D->U and D->F configuration

In general, the second slot format may specify, (i) for some (e.g. one or more) time interval(s) for which the first slot format specifies that the transmission direction is the downlink direction that the transmission direction is the uplink direction; and (ii) for some (e.g. one or more) other time interval(s), for which the first slot format specifies that the transmission direction is the downlink direction that the transmission direction is flexible. It is noted that the "some time intervals(s)" under (ii) are other time intervals than the "some time intervals(s)" under (i).

The determination of the UE whether the second slot format indicates that a transmission direction is flexible may be based on whether the UE is configured to monitor a DCI format (e.g. a group common and/or dynamic control signalling, such as DCI format 2_0), in which dynamic configurations of flexible time intervals are transmitted by the base station. More specifically, such dynamic configurations may inform the UE of the dynamic configuration of flexible time intervals of the first and/or the second slot format. In particular, the dynamic configuration may specify whether the transmission direction in a flexible time interval (i.e. a time interval for which a slot format indicates that the transmission is flexible) is the downlink or the uplink direction. It is further noted that such a dynamic configurations may be transmitted in form of an indication (here also referred to as dynamic slot format indicator (SFI)) that is included in said DCI for receiving dynamic configurations of flexible time interval. For instance, the slot format indicator may include an index value, associated with a slot format (e.g. in the form of a table).

In particular, the UE may determine: (i) if it (i.e. the UE itself) is not configured to receive dynamic configurations (e.g. SFI) of flexible time intervals (e.g. via DCI format 2_0): that the second signalling can not specify that the transmission direction is flexible for any of the time intervals for which the first slot format specifies that the transmission direction is the downlink direction, and (ii) if it is configured to receive SFI: that the second signalling can specify that the transmission direction is flexible for a time interval for which the first slot format specifies that the transmission direction is the downlink direction.

In other words, if the UE is not configured (e.g. by the base station) to receive SFI for indicating whether a flexible transmission direction is DL or UL, the second slot format does not indicate that the flexible transmission directions. This may reduce the overhead in a situation where the UE is not configured with such dynamic slot format indicator as it may not have a particular need for flexible time intervals.

Examples where UE is not configured to monitor dynamic SFI could be that sfi-RNTI (Radio Network Temporary Identifier) value is not provided to the UE, that a control resource set for DCI format 2_0 is not provided to the UE, or e.g. that the RRC IE SlotFormatlndicator is not provided to the UE.

For instance, a UE that is not configured to monitor DCI 2_0, "D" in tdd-UL-DL-ConfigurationCommon can be configured (only) as "U" or "D" (but not as "F") by the second slot format. On the other hand, a UE that is configured to monitor DCI 2_0 "D" in tdd-UL-DL-ConfigurationCommon can be configured as "F" by the second slot format. For instance, SFI in DCI 2_0 may be used to indicate the dynamic transmission direction of flexible time intervals of the first and the second slot format.

An example of this is illustrated in in **Fig. 18****:** Rel-15/16/17 UEs recognize tdd-UL-DL-ConfigurationCommon transmitted in SIB1 by the base station, and obtain the first slot format as "DDDDU", as shown in the first row of Fig. 18. As illustrated in the second row, one Rel-18 or beyond UE is not monitoring DCI 2_0 and configured with the second slot format "DUUUU" by dedicated RRC tdd-UL-DL-ConfigurationDedicated. Another Rel-18 or beyond UE (third row of Fig. 18), which is monitoring DCI 2_0, is configured with the second slot format "DDFFU" by dedicated RRC tdd-UL-DL-ConfigurationDedicated. SBFD operation at the gNB is thus possible, by transmitting DL and receiving UL at the same time over "D->F" or "D->U" symbols/slots.

A second lot format with a "D→U" and/or a "D→F"configuration, thus may enable SBFD operation at the base station using time intervals for which the first slot format indicates that the transmission direction is the downlink direction, such as legacy (Rel-15/16/17NR) D symbols/slots).

### Allowing U->D configuration

In general, the second slot format may specify that the transmission direction is the downlink direction for a (e.g. one or more/at least one/some time interval(s)) time interval for which the first slot format specifies that the transmission direction is the uplink direction. For instance, a "U" in tdd-UL-DL-ConfigurationCommon (corresponding to a first signalling) may be configured as a "D" by the second slot format.

The UE may then assume DL transmission(s) in the "U->D" time intervals (i.e. the UE may follow the new configuration "D" and ignore the legacy configuration "U" indicated by the first slot format), and the gNB may/will not configure any UL reception in these symbols/slots, as has been explained with reference to Fig. 13. To be specific, the transmission direction may be the downlink direction in each time interval for which: (i) the first slot format specifies that the transmission direction is the uplink direction, and (ii) the second slot format specifies that the transmission direction is the downlink direction.

Alternatively, the approach discussed with reference to Fig. 14 may be followed by UE and base station, i.e. the gNB can configure UE to either receive or transmit (but not at the same time) on these symbols/slots. To be specific, the transmission direction may be flexible in each of the plurality of time intervals for which: (i) the first slot format specifies that the transmission direction is the uplink direction, and (ii) the second slot format specifies that the transmission direction is the downlink direction.

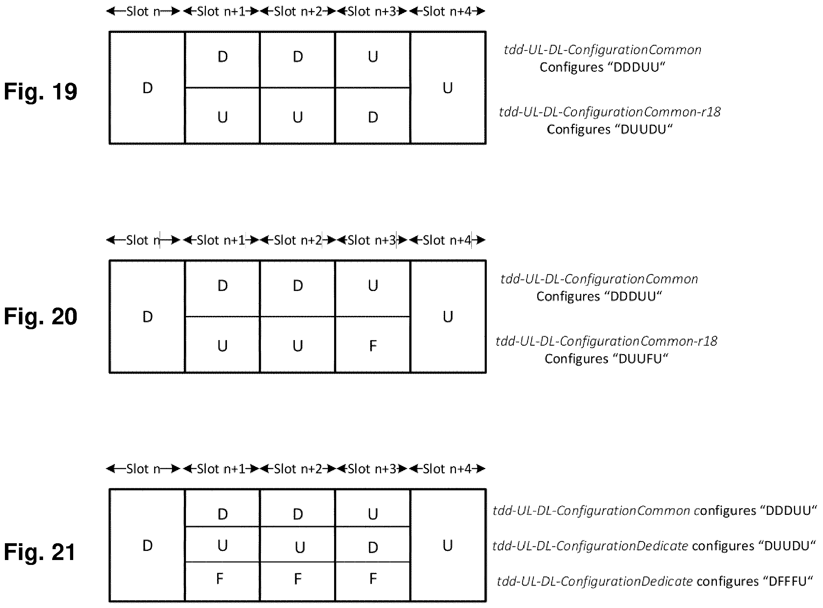

The example in **Fig. 19** illustrates a combination of the above "D->U" configuration (i.e. in the n+1-thand n+2-thslot) and the present "U->D" configuration (in the n+3-th slot). As in the Fig. 16 and 17, both parameters, tdd-UL-DL-ConfigurationCommon and tdd-UL-DL-ConfigurationCommon-r18, are broadcast by SIB and configure the first slot format with a periodicity of 5 slots. Rel-15/16/17 UEs recognize (only) tdd-UL-DL-ConfigurationCommon (corresponding to the first signalling), and obtain the slot format DDDUU, as illustrated in the first row of Fig 19. Rel-18 or beyond UEs may recognize both parameters, and obtain a different slot format from e.g. tdd-UL-DL-ConfigurationCommon-r18 as DUUDU. As a result, SBFD operation at gNB is made possible, by transmitting DL and receiving UL at the same time over the "D->U" and the "U->D" symbols/slots. In particular, a second slot format with a "U→D" configuration, thus may enable SBFD operation at the base station using time intervals for which the first slot format indicates that the transmission direction is the uplink direction, such as legacy (Rel-15/16/17NR) D symbols/slots).

### Allowing U->F configuration

In general, the second slot format may specify that the transmission direction is flexible for a time interval (e.g. one or more/at least one/some time interval(s)) for which the first slot format specifies that the transmission direction is the uplink direction.

For instance, "U" in tdd-UL-DL-ConfigurationCommon (corresponding to a first signalling) may be configured as "F" by the second slot format. The UE may assume that the transmission direction for such a time interval is undetermined by the slot format. Thus, the gNB can configure UEs to either receive or transmit (but not both at the same time) on these "U->F" symbols/slots.

An example of this is illustrated in **Fig. 20****,** which is similar to the above "U->D" case of Fig. 19, with the only difference that DUUFU is configured by tdd-UL-DL-ConfigurationCommon-r18 (i.e. by the second slot format). As a result, SBFD operation at gNB is made possible, by transmitting (DL) and receiving (UL) at the same time over "D->U" and "U->F" symbols.

More specifically, at the time of the "D->U" and "U->F" symbols (i.e. at the time of symbols of the second, n+2-th, or n+3-th slot), a legacy UE may transmit transmissions to the base station and a non-legacy UE may receive data from the base station. In particular, a second slot format with a "U→F" configuration, thus may enable SBFD operation at the base station using time intervals for which the first slot format indicates that the transmission direction is the uplink direction, such as legacy (Rel-15/16/17NR) D symbols/slots).

### Combined case of U->D and U->F configuration

In general, the second slot format may specify, (i) for some (e.g. one or more) time interval(s) for which the first slot format specifies that the transmission direction is the uplink direction that the transmission direction is the downlink direction; and (ii) for some (e.g. one or more) other time interval(s), for which the first slot format specifies that the transmission direction is the uplink direction that the transmission direction is flexible. It is noted that the "some time intervals(s)" under (ii) are other time intervals than the "some time intervals(s)" under (i).

As in the combined case of D->U and D->F, the determination of the UE whether the second slot format indicates that a transmission direction is flexible may be based on whether the UE is configured to monitor a DCI format (e.g. a group common and/or dynamic control signalling, such as DCI format 2_0), in which dynamic configurations (e.g. in form of a dynamic slot format indicator, SFI, as already explained above for the combined case of a D->U and D->F configuration) of flexible time intervals are transmitted by the base station. Details on the dynamic configuration and the SFI have already been described above in the section on the combined case of a D->U and D->F configuration and are not repeated here.

In general, the UE may determine: (i) it (i.e. the UE itself) is not configured to receive dynamic configurations (e.g. SFI) of flexible time intervals(e.g. via DCI format 2_0): that the second signalling can not specify that the transmission direction is flexible for any of the time intervals for which the first slot format specifies that the transmission direction is the uplink direction, and (ii) if it is configured to receive SFI: that the second signalling can specify that the transmission direction is flexible for a time interval for which the first slot format specifies that the transmission direction is the uplink direction.

In other words, if the UE is not configured (e.g. by the base station) to receive SFI for indicating whether a flexible transmission direction is DL or UL, the second slot format does not indicate that the flexible transmission directions. This may reduce the overhead in a situation where the UE is not configured with such dynamic slot format indicator as it may not have a particular need for flexible time intervals.

Examples where UE is not configured to monitor dynamic SFI could be that sfi-RNTI (Radio Network Temporary Identifier) value is not provided to the UE, that control resource set for DCI format 2_0 is not provided to the UE, or e.g. that the RRC IE SlotFormatlndicator is not provided to the UE.

For instance, a UE that is not configured to monitor DCI 2_0, "U" in tdd-UL-DL-ConfigurationCommon can be configured (only) as "D" or "U" (but not as "F") by the second slot format. On the other hand, a UE that is configured to monitor DCI 2_0, "U" in tdd-UL-DL-ConfigurationCommon can be configured as "F" by the second slot format. As mentioned above, for instance, SFI in DCI 2_0 may be used to indicate the dynamic transmission direction of flexible time intervals of the first and the second slot format.

An example of this is illustrated in in **Fig. 21****:** Rel-15/16/17 UEs recognize tdd-UL-DL-ConfigurationCommon transmitted in SIB by the base station, and obtain the first slot format as DDDUU, as shown in the first row of Fig. 21. As illustrated in the second row, one Rel-18 or beyond UE is not monitoring DCI 2_0 and configured with the second slot format "DUUDU" by dedicated RRC tdd-UL-DL-ConfigurationDedicated. Another Rel-18 or beyond UE (third row of Fig. 21), which is monitoring DCI 2_0, is configured with the second slot format as "DFFFU" by dedicated RRC tdd-UL-DL-ConfigurationDedicated. SBFD operation at the gNB is thus possible, by transmitting (DL) and receiving (UL) at the same time over "D->F" (n+1-th and n+2-th slot), "D->U" (n+1-th slot and n+2-slot slot), "U->D" (n+3-th slot) and/or "U->F" symbols/slots (n+3-th slot).

A second lot format with a "U→D" and/or a "U→F"configuration, thus may enable SBFD operation at the base station using time intervals for which the first slot format indicates that the transmission direction is the uplink direction, such as legacy (Rel-15/16/17NR) U symbols/slots).

It is further noted that the above explained slot configurations "D→U", "D→F", "U→D", and "U→F" may be combined. In other words, a second slot format may have "D→U", "D→F", "U→D", and/or "U→F" slots with respect to the first slot format (e.g. a cell common legacy slot format).

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device comprises a transceiver and circuitry. The transceiver, in operation, receives a first signalling and a second signalling, wherein the first signalling is a cell common signalling. The circuitry, in operation, obtains, from the first signalling, a first indication indicating a first slot format for a frequency band, and obtains, from the second signalling, a second indication indicating a second slot format for the frequency band. The first slot format specifies, for each of a plurality of time intervals, whether a transmission direction in the time interval is flexible, an uplink direction, or a downlink direction, and the second slot format specifies, for each or a subset of the plurality of time intervals, whether a transmission direction in the time interval is flexible, the uplink direction, or the downlink direction. In particular, the second slot format specifies: (i) a different transmission direction than the first slot format for a time interval of the plurality of time intervals for which the first slot format specifies that the transmission direction is the downlink direction, and/or (ii) a different transmission direction than the first slot format for a time interval of the plurality of time intervals for which the first slot format specifies that the transmission direction is the uplink direction.

According to a second aspect provided in addition to the first aspect, the second slot format specifies that the transmission direction is the uplink direction for a time interval of the plurality of time intervals for which the first slot format specifies that the transmission direction is the downlink direction.

According to a third aspect provided in addition to the second aspect, the circuitry, in operation, determines, that the transmission direction is the uplink direction in each of the plurality of time intervals for which: (i) the first slot format specifies that the transmission direction is the downlink direction, and (ii) the second slot format specifies that the transmission direction is the uplink direction.

According to a fourth aspect provided in addition to the second aspect, the circuitry, in operation, determines, that the transmission direction is flexible in each of the plurality of time intervals for which: (i) the first slot format specifies that the transmission direction is the downlink direction, and (ii) the second slot format specifies that the transmission direction is the uplink direction.

According to a fifth aspect, provided in addition to one of the first to fourth aspect, a total number of time intervals for which the second slot format specifies that the transmission direction is the uplink direction is larger than a total number of time intervals for which the first slot format specifies that the transmission direction is the uplink direction.

According to a sixth aspect, provided in addition to one of the first to fifth aspect, the second slot format specifies that the transmission direction is flexible for a time interval of the plurality of time intervals for which the first slot format specifies that the transmission direction is the downlink direction.

According to a seventh aspect provided in addition to one of the first to sixth aspect, the circuitry, in operation, determines: (i) if the communication device is not configured to monitor a downlink control information (DCI) for receiving dynamic configurations of flexible time intervals: that the second signalling can not specify that the transmission direction is flexible for any of the time interval of the plurality of time intervals for which the first slot format specifies that the transmission direction is the downlink direction, and (ii) if the communication device is configured to monitor the DCI for receiving dynamic configurations of flexible time intervals:: that the second signalling can specify that the transmission direction is flexible for a time interval of the plurality of time intervals for which the first slot format specifies that the transmission direction is the downlink direction.

According to an eighth aspect provided in addition to seventh aspect: (i) the second slot format specifies that the transmission direction is the downlink direction for a time interval of the plurality of time intervals for which the first slot format specifies that the transmission direction is the uplink direction; and/or (ii) the second slot format specifies that the transmission direction is flexible for a time interval of the plurality of time intervals for which the first slot format specifies that the transmission direction is the uplink direction.

According to a ninth aspect provided in addition to the eighth aspect, the circuitry, in operation, determines, that the transmission direction is the downlink direction in each of the plurality of time intervals for which: (i) the first slot format specifies that the transmission direction is the uplink direction, and (ii) the second slot format specifies that the transmission direction is the downlink direction.

According to a tenth aspect provided in addition to the eighth aspect, the circuitry, in operation, determines, that the transmission direction is flexible in each of the plurality of time intervals for which: (i) the first slot format specifies that the transmission direction is the uplink direction, and (ii) the second slot format specifies that the transmission direction is the downlink direction.

According to an eleventh aspect provided in addition to any one of the first to tenth aspect, the circuitry, in operation, determines: (i) if the communication device is not configured to monitor a downlink control information (DCI) for receiving dynamic configurations of flexible time intervals: that the second signalling can not specify that the transmission direction is flexible for any of the time interval of the plurality of time intervals for which the first slot format specifies that the transmission direction is the uplink direction, and (ii) if the communication device is configured to monitor the DCI for receiving dynamic configurations of flexible time interval: that the second signalling can specify that the transmission direction is flexible for a time interval of the plurality of time intervals for which the first slot format specifies that the transmission direction is the uplink direction.

According to a twelfth aspect provided in addition to any one of the first to the eleventh aspect, the second signalling is a cell common signalling or a dedicated signalling; the cell common signalling or the dedicated signalling indicates, for each or a subset of the plurality of time intervals whether the transmission direction is flexible, the uplink direction, or the downlink direction; the plurality of time intervals corresponds to a division of a period of the second slot format into the time intervals; and the period is a time duration after which a pattern of transmission directions specified by the second slot format repeats itself.

According to a thirteenth aspect, a method for a communication device is provided. The method includes the steps of: (i) receiving a first signalling, wherein the first signalling is a cell common signalling; (ii) obtaining, from the first signalling, a first indication indicating a first slot format for a frequency band, wherein the first slot format specifies, for each of a plurality of time intervals, whether a transmission direction in the time interval is flexible, an uplink direction, or a downlink direction; (iii) receiving a second signalling; and (iv) obtaining, from the second signalling, a second indication indicating a second slot format for the frequency band, wherein the second slot format specifies, for each or a subset of the plurality of time intervals, whether a transmission direction in the time interval is flexible, the uplink direction, or the downlink direction. In particular, the second slot format specifies: (i) a different transmission direction than the first slot format for a time interval of the plurality of time intervals for which the first slot format specifies that the transmission direction is the uplink direction, and/or (ii) a different transmission direction than the first slot format for a time interval of the plurality of time intervals for which the first slot format specifies that the transmission direction is the downlink direction.

According to a fourteenth aspect, a scheduling device is provided. The scheduling device comprises circuitry and a transceiver. The circuitry, in operation: (i) determines a first slot format for a frequency band, wherein the first slot format specifies, for each of a plurality of time intervals, whether a transmission direction in the time interval is flexible, an uplink direction, or a downlink direction, (ii) generates a first signalling including a first indication indicating the first slot format, wherein the first signalling is a cell common signalling, (iii) determines a second slot format for the frequency band, and (iv) generates a second signalling indicating the second slot format. The transceiver, in operation, transmits the first signalling and the second signalling, wherein the second slot format specifies, for each or a subset of the plurality of time intervals, whether a transmission direction in the time interval is flexible, the uplink direction, or the downlink direction. In particular, the second slot format specifies: (i) a different transmission direction than the first slot format for a time interval of the plurality of time intervals for which the first slot format specifies that the transmission direction is the uplink direction, and/or (ii) a different transmission direction than the first slot format for a time interval of the plurality of time intervals for which the first slot format specifies that the transmission direction is the downlink direction.

According to a fifteenth aspect, provided in addition to the fourteenth aspect, the second slot format specifies that the transmission direction is the uplink direction for a time interval of the plurality of time intervals for which the first slot format specifies that the transmission direction is the downlink direction.

According to a sixteenth aspect provided in addition to the fifteenth aspect, the transmission direction is the uplink direction in each of the plurality of time intervals for which: (i) the first slot format specifies that the transmission direction is the downlink direction, and (ii) the second slot format specifies that the transmission direction is the uplink direction.

According to a seventeenth aspect provided in addition to the fifteenth aspect, the transmission direction is flexible in each of the plurality of time intervals for which: (i) the first slot format specifies that the transmission direction is the downlink direction, and (ii) the second slot format specifies that the transmission direction is the uplink direction.

According to a eighteenth aspect, provided in addition to one of the fourteenth to seventeenth aspect, a total number of time intervals for which the second slot format specifies that the transmission direction is the uplink direction is larger than a total number of time intervals for which the first slot format specifies that the transmission direction is the uplink direction.

According to a nineteenth aspect, provided in addition to one of the fourteenth to eighteenth aspect, the second slot format specifies that the transmission direction is flexible for a time interval of the plurality of time intervals for which the first slot format specifies that the transmission direction is the downlink direction.

According to a 20th aspect provided in addition to one of the fourteenth to eighteenth aspect:
(i) if a communication device to which the second signalling is transmitted is not configured to monitor a dedicated downlink control information (DCI) for receiving dynamic configurations of flexible time intervals of the second slot format: the second signalling can not specify that the transmission direction is flexible for any of the time interval of the plurality of time intervals for which the first slot format specifies that the transmission direction is the downlink direction, and
(ii) if the communication device is configured to monitor the dedicated DCI for receiving dynamic configurations of flexible time intervals: the second signalling can specify that the transmission direction is flexible for a time interval of the plurality of time intervals for which the first slot format specifies that the transmission direction is the downlink direction.

According to a 21st aspect, provided in addition to 20th aspect: (i) the second slot format specifies that the transmission direction is the downlink direction for a time interval of the plurality of time intervals for which the first slot format specifies that the transmission direction is the uplink direction; and/or (ii) the second slot format specifies that the transmission direction is flexible for a time interval of the plurality of time intervals for which the first slot format specifies that the transmission direction is the uplink direction.

According to a 22nd aspect, provided in addition to the 21st aspect, the transmission direction is the downlink direction in each of the plurality of time intervals for which: (i) the first slot format specifies that the transmission direction is the uplink direction, and (ii) the second slot format specifies that the transmission direction is the downlink direction.

According to a 23rd aspect, in addition to the 21st aspect, the transmission direction is flexible in each of the plurality of time intervals for which: (i) the first slot format specifies that the transmission direction is the uplink direction, and (ii) the second slot format specifies that the transmission direction is the downlink direction.

According to a 24th aspect, provided in addition to any one of the fourteenth to 23rd aspect, if a communication device to which the second signalling is transmitted is not configured to monitor a dedicated downlink control information (DCI) for receiving dynamic configurations of flexible time intervals of the second slot format: the second signalling can not specify that the transmission direction is flexible for any of the time interval of the plurality of time intervals for which the first slot format specifies that the transmission direction is the uplink direction, and (ii) if the communication device is configured to monitor the dedicated DCI for receiving dynamic configurations of flexible time interval: the second signalling can specify that the transmission direction is flexible for a time interval of the plurality of time intervals for which the first slot format specifies that the transmission direction is the uplink direction.

According to a 25th aspect, provided in addition to any one of the fourteenth to the 24th aspect, the second signalling is a cell common signalling or a dedicated signalling; the cell common signalling or the dedicated signalling indicates, for each or a subset of the plurality of time intervals whether the transmission direction is flexible, the uplink direction, or the downlink direction; the plurality of time intervals corresponds to a division of a period of the second slot format into the time intervals; and the period is a time duration after which a pattern of transmission directions specified by the second slot format repeats itself.

According to a 26th aspect, a method for a scheduling device is provided. The method includes the steps of: (i) determining a first slot format for a frequency band, wherein the first slot format specifies, for each of a plurality of time intervals, whether a transmission direction in the time interval is flexible, an uplink direction, or a downlink direction; (ii) generating a first signalling including a first indication indicating the first slot format, wherein the first signalling is a cell common signalling; (iii) transmitting the first signalling; (iv) determining a second slot format for the frequency band; (v) generating a second signalling indicating the second slot format; and (vi) transmitting the second signalling, wherein the second slot format specifies, for each or a subset of the plurality of time intervals, whether a transmission direction in the time interval is flexible, the uplink direction, or the downlink direction. In particular, the second slot format specifies: (i) a different transmission direction than the first slot format for a time interval of the plurality of time intervals for which the first slot format specifies that the transmission direction is the uplink direction, and/or (ii) a different transmission direction than the first slot format for a time interval of the plurality of time intervals for which the first slot format specifies that the transmission direction is the downlink direction.

According to 27th aspect, an integrated circuit is provided, which, in operation, controls a process of a communication device, the process including the steps of the method of the thirteenth aspect.

According to 28th aspect, an integrated circuit, which, in operation, controls a process of a scheduling device, the process including the steps of the method of the 26th aspect.

Summarizing, the present disclosure relates to a communication device, a scheduling device and respective methods for a communication device and a scheduling device. For example, the communication device is a user equipment (UE) comprising a circuitry and a transceiver. The transceiver may be configured to receive a first signalling and a second signalling, wherein the first signalling is a cell common signalling. The circuitry may be configured to obtain, from the first signalling, a first indication indicating a first slot format for a frequency band, and to obtain, from the second signalling, a second indication indicating a second slot format for the frequency band. The first slot format specifies, for each of a plurality of time intervals, whether a transmission direction in the time interval is flexible, an uplink direction, or a downlink direction. The second slot format specifies, for each or a subset of the plurality of time intervals, whether a transmission direction in the time interval is flexible, the uplink direction, or the downlink direction. Moreover, the second slot format specifies: (i) a different transmission direction than the first slot format for a time interval of the plurality of time intervals for which the first slot format specifies that the transmission direction is the downlink direction, and/or (ii) a different transmission direction than the first slot format for a time interval of the plurality of time intervals for which the first slot format specifies that the transmission direction is the uplink direction.

## Claims

1. A communication device, comprising:
a transceiver which, in operation, receives a first signalling and a second signalling, wherein the first signalling is a cell common signalling; and
circuitry which, in operation:
- obtains, from the first signalling, a first indication indicating a first slot format for a frequency band, and
- obtains, from the second signalling, a second indication indicating a second slot format for the frequency band, and
the first slot format specifies, for each of a plurality of time intervals, whether a transmission direction in the time interval is flexible, an uplink direction, or a downlink direction,
the second slot format specifies, for each or a subset of the plurality of time intervals, whether a transmission direction in the time interval is flexible, the uplink direction, or the downlink direction, and
the second slot format specifies:
- a different transmission direction than the first slot format for a time interval of the plurality of time intervals for which the first slot format specifies that the transmission direction is the downlink direction, and/or
- a different transmission direction than the first slot format for a time interval of the plurality of time intervals for which the first slot format specifies that the transmission direction is the uplink direction.

2. The communication device according to claim 1, wherein
the second slot format specifies that the transmission direction is the uplink direction for a time interval of the plurality of time intervals for which the first slot format specifies that the transmission direction is the downlink direction.

3. The communication device according to claim 2, wherein
the circuitry, in operation, determines, that the transmission direction is the uplink direction in each of the plurality of time intervals for which:
- the first slot format specifies that the transmission direction is the downlink direction, and
- the second slot format specifies that the transmission direction is the uplink direction.

4. The communication device according to claim 2, wherein
the circuitry, in operation, determines, that the transmission direction is flexible in each of the plurality of time intervals for which:
- the first slot format specifies that the transmission direction is the downlink direction, and
- the second slot format specifies that the transmission direction is the uplink direction.

5. The communication device according to any of claims 1 to 4, wherein
a total number of time intervals for which the second slot format specifies that the transmission direction is the uplink direction is larger than a total number of time intervals for which the first slot format specifies that the transmission direction is the uplink direction.

6. The communication device according to any of claims 1 to 5, wherein
the second slot format specifies that the transmission direction is flexible for a time interval of the plurality of time intervals for which the first slot format specifies that the transmission direction is the downlink direction.

7. The communication device according to any of claims 1 to 6, wherein
the circuitry, in operation, determines:
- if the communication device is not configured to monitor a downlink control information, DCI, for receiving dynamic configurations of flexible time intervals: that the second signalling can not specify that the transmission direction is flexible for any of the time interval of the plurality of time intervals for which the first slot format specifies that the transmission direction is the downlink direction, and
- if the communication device is configured to monitor the DCI for receiving dynamic configurations of flexible time intervals: that the second signalling can specify that the transmission direction is flexible for a time interval of the plurality of time intervals for which the first slot format specifies that the transmission direction is the downlink direction.

8. The communication device according to any of claims 1 to 7, wherein
the second slot format specifies that the transmission direction is the downlink direction for a time interval of the plurality of time intervals for which the first slot format specifies that the transmission direction is the uplink direction; and/or
the second slot format specifies that the transmission direction is flexible for a time interval of the plurality of time intervals for which the first slot format specifies that the transmission direction is the uplink direction.

9. The communication device according to claim 8, wherein
the circuitry, in operation, determines, that the transmission direction is the downlink direction in each of the plurality of time intervals for which:
- the first slot format specifies that the transmission direction is the uplink direction, and
- the second slot format specifies that the transmission direction is the downlink direction.

10. The communication device according to claim 8, wherein
the circuitry, in operation, determines, that the transmission direction is flexible in each of the plurality of time intervals for which:
- the first slot format specifies that the transmission direction is the uplink direction, and
- the second slot format specifies that the transmission direction is the downlink direction.

11. The communication device according to any of claims 1 to 10, wherein
the circuitry, in operation, determines:
- if the communication device is not configured to monitor a downlink control information, DCI, for receiving dynamic configurations of flexible time intervals: that the second signalling can not specify that the transmission direction is flexible for any of the time interval of the plurality of time intervals for which the first slot format specifies that the transmission direction is the uplink direction, and
- if the communication device is configured to monitor the DCI for receiving dynamic configurations of flexible time intervals: that the second signalling can specify that the transmission direction is flexible for a time interval of the plurality of time intervals for which the first slot format specifies that the transmission direction is the uplink direction.

12. The communication device according to any of claims 1 to 11, wherein
the second signalling is a cell common signalling or a dedicated signalling;
the cell common signalling or the dedicated signalling indicates, for each or a subset of the plurality of time intervals whether the transmission direction is flexible, the uplink direction, or the downlink direction;
the plurality of time intervals corresponds to a division of a period of the second slot format into the time intervals; and
the period is a time duration after which a pattern of transmission directions specified by the second slot format repeats itself.

13. A method for a communication device, the method including the steps of:
receiving a first signalling, wherein the first signalling is a cell common signalling;
obtaining, from the first signalling, a first indication indicating a first slot format for a frequency band, wherein the first slot format specifies, for each of a plurality of time intervals, whether a transmission direction in the time interval is flexible, an uplink direction, or a downlink direction;
receiving a second signalling; and
obtaining, from the second signalling, a second indication indicating a second slot format for the frequency band, wherein
the second slot format specifies, for each or a subset of the plurality of time intervals, whether a transmission direction in the time interval is flexible, the uplink direction, or the downlink direction, and
the second slot format specifies:
- a different transmission direction than the first slot format for a time interval of the plurality of time intervals for which the first slot format specifies that the transmission direction is the uplink direction, and/or
- a different transmission direction than the first slot format for a time interval of the plurality of time intervals for which the first slot format specifies that the transmission direction is the downlink direction.

14. A scheduling device comprising:
circuitry which, in operation:
- determines a first slot format for a frequency band, wherein the first slot format specifies, for each of a plurality of time intervals, whether a transmission direction in the time interval is flexible, an uplink direction, or a downlink direction,
- generates a first signalling including a first indication indicating the first slot format, wherein the first signalling is a cell common signalling,
- determines a second slot format for the frequency band, and
- generates a second signalling indicating the second slot format; and
a transceiver which, in operation, transmits the first signalling and the second signalling, wherein
the second slot format specifies, for each or a subset of the plurality of time intervals, whether a transmission direction in the time interval is flexible, the uplink direction, or the downlink direction, and
the second slot format specifies:
- a different transmission direction than the first slot format for a time interval of the plurality of time intervals for which the first slot format specifies that the transmission direction is the uplink direction, and/or
- a different transmission direction than the first slot format for a time interval of the plurality of time intervals for which the first slot format specifies that the transmission direction is the downlink direction.

15. A method for a scheduling device, the method including the steps of:
determining a first slot format for a frequency band, wherein the first slot format specifies, for each of a plurality of time intervals, whether a transmission direction in the time interval is flexible, an uplink direction, or a downlink direction;
generating a first signalling including a first indication indicating the first slot format, wherein the first signalling is a cell common signalling;
transmitting the first signalling;
determining a second slot format for the frequency band;
generating a second signalling indicating the second slot format; and
transmitting the second signalling, wherein
the second slot format specifies, for each or a subset of the plurality of time intervals, whether a transmission direction in the time interval is flexible, the uplink direction, or the downlink direction, and
the second slot format specifies:
- a different transmission direction than the first slot format for a time interval of the plurality of time intervals for which the first slot format specifies that the transmission direction is the uplink direction, and/or
- a different transmission direction than the first slot format for a time interval of the plurality of time intervals for which the first slot format specifies that the transmission direction is the downlink direction.
